(19) Europäisches Patentamt
European Patent Office
Office européen des brevets

(11) **EP 4 563 986 A1**

(12) **EUROPEAN PATENT APPLICATION**
published in accordance with Art. 153(4) EPC

(43) Date of publication:
**04.06.2025 Bulletin 2025/23**

(21) Application number: **23846526.4**

(22) Date of filing: **25.07.2023**

(51) International Patent Classification (IPC):
**G01N 23/041** *(2018.01)*      **G01N 23/04** *(2018.01)*

(52) Cooperative Patent Classification (CPC):
**G01N 23/04; G01N 23/041**

(86) International application number:
**PCT/JP2023/027237**

(87) International publication number:
**WO 2024/024796 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.07.2022 JP 2022121146**

(71) Applicant: **KONICA MINOLTA, INC.
Tokyo 100-7015 (JP)**

(72) Inventor: **OTA Ikuma
Tokyo 100-7015 (JP)**

(74) Representative: **MFG Patentanwälte
Meyer-Wildhagen Meggle-Freund
Gerhard PartG mbB
Amalienstraße 62
80799 München (DE)**

(54) **IMAGE MANAGEMENT SYSTEM, SAMPLE SELECTION METHOD, IMAGE MANAGEMENT DEVICE, IMAGE DISPLAY DEVICE, AND PROGRAM**

(57)    Provided are an image management system, a sample selection method, an image management device, an image display device, and a program that are capable of accumulating, as know-how, the reason and the intent behind a selection of a region when selecting a region from a parent sample for quality evaluation. The image management system (X-ray Talbot imaging device 1, control device 20) comprises a control unit (CPU 21) that, when a user has selected a region from a first image of a first sample in which prescribed quality information can be recognized, stores information pertaining to the selection of the region in a storage unit (storage unit 23) in association with the first image on the basis of skill level information of the user.

FIG. 2

EP 4 563 986 A1

# Description

## Technical Field

The present invention relates to an image management system, a sample selection method, an image management device, an image display device, and a program.

## Background Art

In composite materials that have attracted attention in recent years, not only the material itself but also the fine internal structure of the material has a great influence on the mechanical properties of the member. For example, CFRP (Carbon Fiber Reinforced Plastics) has a three dimensional structure with weaving and orientation of carbon fibers, and the mechanical strength is greatly affected by the fiber orientation and the fiber density.

In the initial stage of resin development, a large number of test samples (parent samples) which have simple shapes such as dumbbell test pieces and flat plates and which are different in material and molding conditions, are prepared, and in order to evaluate the internal state of a molded article, the test pieces are generally cut out into a size which can be analyzed. Next, using the cut-out samples (child samples), the states of the surface of the test pieces and the inside of the test pieces are confirmed by measurement of the fiber amount and fiber length after ash content measurement, $\mu$CT, an optical microscope, and SEM. In addition, as the evaluation of material properties, a tensile strength test, a Charpy impact test, a bending test, and a reliability test by repeated deformation, chemical application, or the like are performed.

In relation to this, a configuration has been disclosed in which after an image of an entire sample is captured as an image of a parent sample (parent image), a specific part of the sample is enlarged and captured and saved as a child image, and the parent image and the child image are saved in association with each other and displayed (Patent Document 1).

## Citation List

## Patent Literature

Patent Document 1: Japanese Patent No. 3366352

## Summary of Invention

## Technical Problem

However, there are only a limited number of evaluators who can accurately cut out, as a child sample, a causal point of interest (a place where a cause of failure in quality evaluation is considered to occur) from a parent sample. This is largely due to the intuition, knacks, and experience of the skilled person.

Therefore, it is desired that anyone can cut out an accurate sample without requiring intuition, knacks, experience, and the like.

Therefore, an object of the present invention is to store, when a region is selected from a parent sample to perform quality evaluation, the reason for selection of the region and the intention of the selection as know-how.

## Solution to Problem

In order to solve the above problem, an image management device according to the present invention includes:

a controller that causes a storage section to store information regarding selection of a region when a user selects the region from a first image of a first sample from which predetermined quality information can be recognized, based on proficiency information of the user in association with the first image.

A sample selection method according to the present invention includes

a step of storing information regarding selection of a region when a user selects the region from a first image of a first sample from which predetermined quality information can be recognized, based on proficiency information of the user in association with the first image; and

a step of cutting out a second sample from the selected region or performing image analysis of the selected region.

An image management device according to the present invention includes:

a controller that causes a storage section to store information regarding selection of a region when a user selects the region from a first image of a first sample from which predetermined quality information can be recognized, based on proficiency information of the user in association with the first image.

An image display device according to the present invention includes:

a controller that causes a storage section to store information regarding selection of a region when a user selects the region from a first image of a first sample from which predetermined quality information can be recognized, based on proficiency information of the user in association with the first image, wherein the controller acquires an image similar to the first sample from the storage section and causes a display part to display information related to the selection of the region in association with the acquired image.

A program according to the present invention causes a computer of an image management device to function as:

a controller that causes a storage section to store information regarding selection of a region when a user selects the region from a first image of a first sample from which predetermined quality information can be recognized, based on proficiency information of the user in association with the first image.

Advantageous Effects of Invention

According to the present invention, when a region is selected from a parent sample to perform quality evaluation, the reason and intention of the selection of the region can be accumulated as know-how.

Brief Description of Drawings

[Fig. 1] This is a schematic diagram showing an overall view of an X-ray Talbot imaging device and a subject housing section.

[Fig. 2] This is a block diagram showing a schematic configuration of an X-ray imaging system.

[Fig. 3] This is a block diagram showing a schematic configuration of a storage.

[Fig. 4] This is an example of a user information database 23g.

[Fig. 5] This is a flowchart showing association processing.

[Fig. 6] This is a display example of an image analysis result display screen.

[Fig. 7] This is a display example of a region selection screen.

[Fig. 8] This is a display example of a cut-out region registration screen.

[Fig. 9] This is a display example of a cut-out region registration screen.

[Fig. 10] This is a display example of an evaluation result registration screen.

[Fig. 11] This is a display example of an evaluation result display screen.

[Fig. 12] This is a display example of an analysis result display screen.

[Fig. 13] This is a flowchart showing information association processing relating to selection of a region.

[Fig. 14] This is a flowchart showing cut-out position automatic detection processing.

[Fig. 15] This is an example showing correspondences between parent sample images and child sample images.

[Fig. 16] This is an example of pattern matching between a parent sample image and a child sample image.

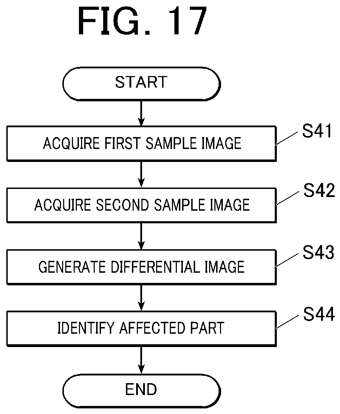

[Fig. 17] This is a flowchart showing cut-out influence specifying processing;

[Fig. 18] This is an example of difference comparison between a parent sample image and a child sample image.

[Fig. 19] This is a flowchart showing similar sample information display processing.

[Fig. 20] This is an example of similarity calculation.

[Fig. 21] This is a display example of a similar image display screen.

Description of Embodiments

In the following, embodiments of the present invention will be described with reference to the drawings. It should be noted that the following embodiments are provided with various limitations that are technically preferable for carrying out the present invention, but the technical scope of the present invention is not limited to the following embodiments and illustrated examples.

(First Embodiment)

In the present embodiment, an X-ray imaging system that stores a first image which is obtained by imaging a first sample (parent sample, subject H) by the X-ray Talbot imaging device 1 and in which predetermined quality information can be recognized, an evaluation result of a second sample (child sample) cut out from the first sample, information of a cut-out position of the second sample in the first sample, and a feature amount at a position corresponding to the cut-out position of the first image and that associates the first image, the evaluation result of the second sample, the information of the cut-out position, and the feature amount will be described.

Various kinds of processing including the association processing are performed by the control device 20 connected to the X-ray Talbot imaging device 1.

[Regarding Subject]

The subject H in the present embodiment is a composite material (also referred to as a composite material), and is used as a constituent member of various products or the like including, for example, electric, electronic, and household electric appliances, a parabolic antenna, a bathtub, a floor material, a roof material, and the like in addition to space and aircraft, an automobile, a ship, and a hanging rod.

As such composite materials, for example, fiber-reinforced plastics (FRP) typified by carbon-fiber-reinforced plastics (CFRP) using carbon fibers or glass fibers as reinforcing fibers, carbon fiber-reinforced thermoplastics (CFRTP), and glass-fiber-reinforced plastics (GFRP), ceramic matrix composites (CMC) using ceramic fibers as a reinforcing material, and the like are known. In addition, in a broad sense, for example, a composite material made of a plurality of kinds of woods such as plywood may be included. In addition, for example, composite materials that do not include fibers, such as metal matrix composites (MMC) concrete and reinforced concrete, may also be included.

The resin used for the composite material is, for example, general-purpose plastic, engineering plastic, or super engineering plastic, but is not limited thereto. The resin is used in a resin composite material to which a filler having a micro-size or nano-size structure is added in order to add predetermined characteristics such as strength, and is often used as a plastic molded product. The filler includes an organic material, an inorganic material, a magnetic material, and a metal material. For example, in a case where strength or rigidity is required for a plastic molded product, a composite material may be used in which PPS, POM, PA, PC, PP, or the like is used as the resin, and aramid fiber, talc, cellulose fiber, or the like is used as the filler. In addition, in a case where the plastic molded product is a plastic magnet, a composite material of nylon as the resin and strontium ferrite, samarium cobalt, or the like as the filler is used in some cases.

[About X-ray Talbot imaging device]

In the present embodiment, as the X-ray Talbot imaging device 1, a device using a Talbot-Lau interferometer including a source grating (also referred to as a multi-grating, a multi-slit, a G0 grating, or the like) 12 is adopted. It is also possible to adopt an X-ray Talbot imaging device using a Talbot interferometer which does not include the source grating 12 and includes only the first grating (also referred to as a G1 grating) 14 and the second grating (also referred to as a G2 grating) 15.

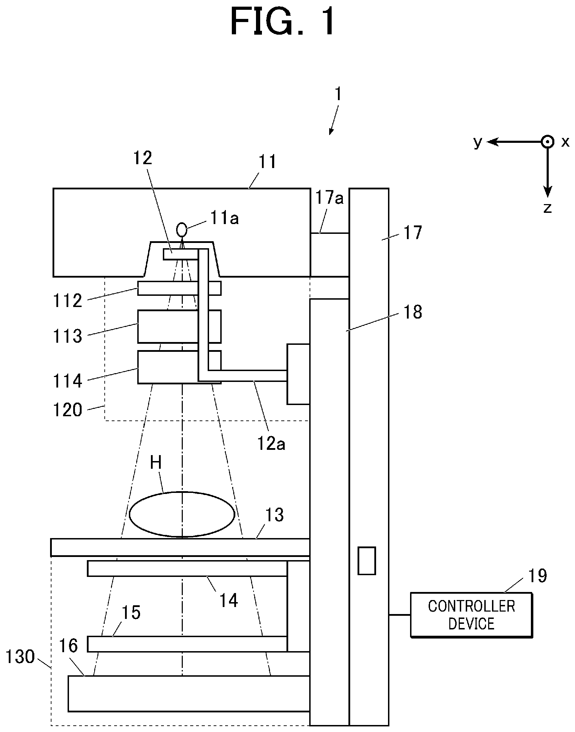

Fig. 1 is a schematic diagram illustrating an overall view of an X-ray Talbot imaging device 1.

The X-ray Talbot imaging device 1 according to the present embodiment includes an X-ray generator 11, the above-described source grating 12, a subject table 13, the above-described first grating 14, the above-described second grating 15, an X-ray detector 16, a support pillar 17, and a base 18.

According to such an X-ray Talbot imaging device 1, at least three types of images (two dimensional images) can be reconstructed (referred to as reconstructed images) by imaging a moire image Mo of the subject H at a predetermined position with respect to the subject table 13 by a method based on the principle of the fringe scanning method or analyzing the moire image Mo using the Fourier transform method. That is, the three types of images are an absorption image (the same as a normal X-ray absorption image) obtained by imaging an average component of moire fringes in the moire image Mo, a differential phase image obtained by imaging phase information of the moire fringes, and a small-angle scattering image obtained by imaging visibility (definition) of the moire fringes. It is also possible to generate more types of images by, for example, re-synthesizing these three types of reconstructed images.

The fringe scanning method is a method in which one of a plurality of gratings is moved in the slit period direction by 1/M (M is a positive integer, M > 2 for an absorption image, and M > 3 for a differential phase image and a small-angle scattering image) of the slit period of the grating, and moire images Mo are captured M times for reconstruction to obtain a high-definition reconstructed image.

In addition, the Fourier transform method is a method in which one moire image Mo is captured by an X-ray Talbot imaging device in a state where a subject exists, and in image processing, the moire image Mo is subjected to Fourier transform or the like to reconstruct and generate an image such as a differential phase image.

The configuration of other parts in the X-ray Talbot imaging device 1 according to the present embodiment will be described. In the present embodiment, the X-ray Talbot imaging device 1 is of a so-called vertical type in which the X-ray generator 11, the source grating 12, the object table 13, the first grating 14, the second grating 15, and the X-ray detector 16 are arranged in this order in the z direction, the direction of gravity. That is, in the present embodiment, the z direction is an irradiation direction of X-rays from the X-ray generator 11.

The X-ray generator 11 includes, as an X-ray source 11a, for example, a Coolidge X-ray source, a rotating-anode X-ray source, or the like which is widely and generally used in medical sites. It is also possible to use other X-ray sources. The X-ray generator 11 of the present embodiment irradiates X-rays in a cone shaped beam from a focal point. That is, as shown in Fig. 1, the X-rays are radiated so as to spread out as the distance from the X-ray generator 11 increases with the X-ray radiation axis Ca, which coincides with the z direction, as the central axis (i.e., the X-ray radiation range).

In the present embodiment, the source grating 12 is provided below the X-ray generator 11. At that time, in order that vibration of the X-ray generator 11 generated due to rotation of the positive electrode of the X-ray generator 11a or the like is not transmitted to the source grating 12, in the present embodiment, the source grating 12 is not attached to the X-ray generating apparatus 11 but is attached to a fixing member 12a attached to the base 18 on the support column 17.

In the present embodiment, a buffer member 17a is provided between the X-ray generator 11 and the support pillar 17 in order to prevent the vibration of the X-ray generator 11 from propagating to other portions of the X-ray Talbot imaging device 1 such as the support pillar 17 (or in order to reduce propagation of the vibration).

In the present embodiment, in addition to the source grating 12, a filter (also referred to as an additional filter) 112 for changing the radiation quality of the X-rays having passed through the source grating 12, an irradiation field aperture 113 for narrowing down the irradiation field of the X-rays to be emitted, an irradiation field lamp 114 for performing alignment by emitting visible light, instead of the X-rays, to the object before the X-rays are emitted, and the like are attached to the fixing member 12a.

The source grating 12, the filter 112, and the irradiation field aperture 113 are not necessarily provided in this order. Furthermore, in the present embodiment, a first cover unit 120 is arranged around the source grating 12 and the like to protect them.

In addition, the controller device 19 (see Fig. 1) is configured by a computer in which a central processing unit (CPU), a read only memory (ROM), a random access memory (RAM), an input/output interface, and the like (not illustrated) are connected to a bus in the present embodiment. The controller device 19 may be configured as a dedicated control device rather than a general-purpose computer in the present embodiment. Furthermore, although not illustrated, the controller device 19 is provided with appropriate means and devices such as input means and output means including an operation part, storage means, and communication means.

The output means includes a display part (not shown) that displays a generated reconstructed image and information necessary for performing various operations of the X-ray Talbot imaging device 1.

The controller device 19 performs overall control of the X-ray Talbot imaging device 1. That is, for example, the controller device 19 is connected to the X-ray generator 11, and can set a tube voltage, a tube current, an irradiation time, and the like in the X-ray source 11a. Further, for example, the controller device 19 may be configured to relay transmission and reception of signals and data between the X-ray detector 16 and the external image processing apparatus 2 or the like.

That is, the controller device 19 according to the present embodiment functions as a controller that causes a series of imaging for acquiring a plurality of moire images Mo (one moire image for the Fourier transform method) necessary for generating a reconstructed image of the subject H to be performed.

[About Control Device]

In the present embodiment, a general-purpose computer device (control PC) is adopted as the control device 20 that executes various types of processing. However, the present invention is not limited thereto, and some of the functions of the control device 20 may be provided on a network so that each process can be executed by exchanging data through communication.

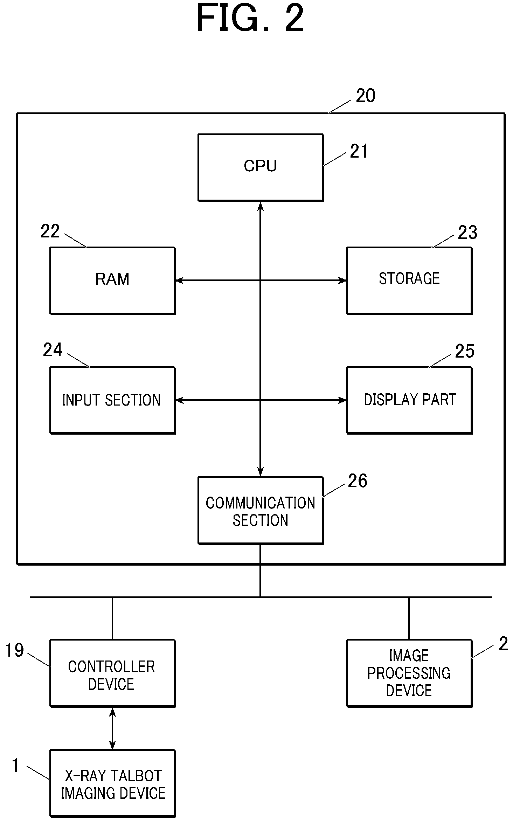

As shown in Fig. 2, the control device 20 includes a central processing unit (CPU) 21, a random access memory (RAM) 22, a storage 23, an input section 24, a display part 25, a communication section 26, and the like.

The CPU 21 reads various programs such as a system program and a processing program stored in the storage 23, develops the programs in the RAM 22, and executes various kinds of processing including association processing described below in accordance with the developed programs. That is, the CPU 21 functions as a controller of the entire X-ray imaging system.

The CPU 21 stores a first image (parent image) of a first sample (parent sample) in a first storage section described later, stores an evaluation result of a second sample (child sample) cut out from the first sample in a second storage section described later, stores information on a cut-out position of the second sample in the first sample and a feature amount at a position corresponding to the cut-out position of the first image in a third storage section described later, and associates the evaluation results of the first image and the second sample with each other by the information on the cut-out position and the feature amount.

Furthermore, the CPU 21 also functions as an acquirer that acquires proficiency information of a user who has input information on selection of a region, which is described later.

The RAM 22 functions as a work area that temporarily stores various programs that can be executed by the CPU 21 read from the storage 23, input or output data, parameters, and the like in various kinds of processing that are executed and controlled by the CPU 21.

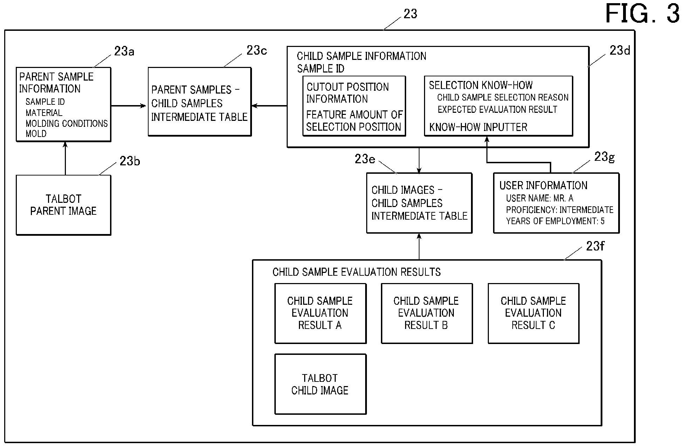

The storage 23 is configured by a hard disk drive (HDD), a semiconductor nonvolatile memory, or the like. The storage 23 stores, in addition to the various programs described above, a database shown in Fig. 3 for executing various kinds of processing such as processing described later.

The storage 23 functions as a first storage section that stores first images (parent images) which are obtained by imaging first samples (parent samples) and from which predetermined quality information can be recognized.

The storage 23 functions as a second storage section that stores evaluation results of second samples (child samples) cut out from the first samples.

In addition, the storage 23 functions as a third storage section that stores the information of the cut-out positions of the second samples in the first samples and the feature amounts at the positions corresponding to the cut-out positions of the first images.

Here, a database (DB) stored in the storage 23 will be specifically described with reference to Fig. 3.

A parent sample information database 23a is a database that stores information on a subject H (parent sample). For example, the parent sample information database 23a stores information on a sample ID, a material, molding conditions, a mold, and the like. The material information includes the resin serving as the base material, the name of the filler for the composite material, the content of the filler, and furthermore, as kneading conditions of the resin serving as the base material and the filler, the screw shape of the kneader, the back pressure, the resin temperature, and the like. In the case of injection molding, the molding conditions include information on temperature and pressure at the time of molding and molding time, such as resin temperature in a screw, back pressure, injection speed, mold temperature, and cooling temperature. The information on the mold includes a design drawing, a gate position and a gate diameter, a runner shape, a shape of the molded product (a flat plate shape or a dumbbell shape), a size of the molded product (information on width, height, and thickness), and the like.

The parent image database 23b is a database that stores image data of the subject H. For example, the parent image database 23b stores Talbot images (parent images) captured using the X-ray Talbot imaging device 1.

The parent sample-child sample intermediate table 23c is a database that associates a parent sample information database 23a with a child sample information database 23d using sample IDs.

The child sample information database 23d is a database that stores information on child samples cut out from subjects H. For example, the child sample information database 23d stores a sample ID, cutout position information, a feature amount of a selection position (region, range), selection know-how (child sample selection reason, predicted evaluation result, know-how inputter, and the like), and the like. Here, the feature amount of the selected position is a value extracted from the parent image and reflecting the quality information, and is, for example, an average value, a deviation, or the like of pixels in the selected region. As another example, an area of a region equal to or more than a certain threshold value after performing binarization processing on the selected region of the parent image is set as the feature amount of the region having a large fiber amount, or a value obtained by extracting a contour of a region equal to or more than a certain threshold value by combining binarization processing and contour extraction and counting the number of regions surrounded by the contour is set as the feature amount as the number of regions of fiber aggregation. Information in the database regarding the child sample selection reason (the reason why the second sample is cut out) is referred to as reason information. Information in the database on selection know-how (child sample selection reason, predicted evaluation result, know-how inputter, and the like) is defined as information on selection of a region.

The child image-child sample intermediate table 23e is a database that associates the child sample information database 23d with the child sample evaluation result database 23f.

The child sample evaluation result database 23f is a database that stores measurement results of child samples. For example, the child sample evaluation result database 23f stores child sample evaluation results and Talbot images (child images) captured using the X-ray Talbot imaging device 1. The child image is not limited to the Talbot image, but may be an optical image, an ultrasonic diagnostic image, a scanning electron microscope (SEM) image, a $\mu$CT image, or the like.

Furthermore, the evaluation of the material properties of the child sample may be evaluation by a tensile strength test, a Charpy impact test, a bending test, or a reliability test by repeated deformation, chemical application, or the like.

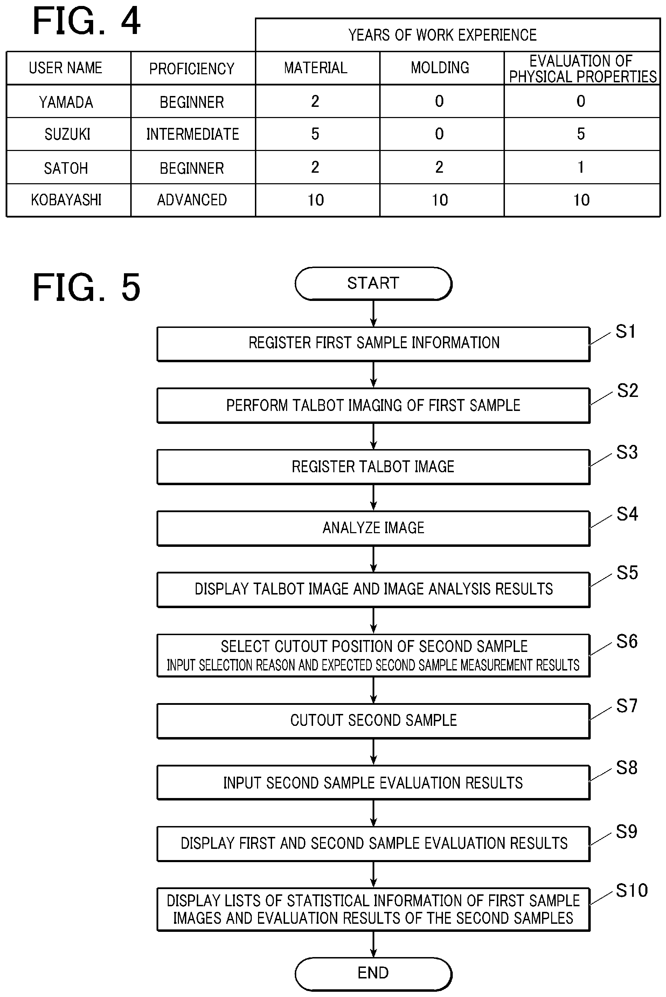

The user information database 23g is a database that stores information related to a user who uses the control device 20. For example, as illustrated in Fig. 4, the user information database 23g stores a user name, a proficiency level (user proficiency level information), the number of years of work, and the like. The proficiency information of the user indicates information corresponding to business experience of the user. For example, as shown in Fig. 4, the number of years of experience in the area of materials, molding, and physical property evaluation may be input so that the proficiency information on the material experience for five years or more may be considered as experienced users. Furthermore, category classifications such as novice, intermediate level, advanced level, beginner, and veteran may be explicitly prepared and used for classification of each user.

As described above, the first image (parent image), the evaluation result of the second sample (child sample), the information of the cut-out position of the second sample in the first sample (parent sample), and the feature amount at the position (selection position) corresponding to the cut-out position of the first image are associated with each other.

The various databases described above are not only stored in the storage 23 of the control device 20, but may also be provided on a network.

Here, the quality information will be described.

The quality information relates to the quality of the subject H, and includes fiber orientation, voids, cracks, foreign matters, density unevenness, fiber unevenness, and the like. Specifically, the quality information includes variations in density of resin and fiber, presence or absence of a foreign substance such as metal inside resin, presence or absence of a void between resin and fiber or a void inside resin, presence or absence of a fiber bundle formed of a plurality of fibers, fiber orientation direction/degree, variations in density (unevenness in fiber amount) of fiber or filler (e.g., talc), weld (generation position, shape), resin flow direction (flow direction near gate, at gate end, etc), microcracks generated by tensile test, heat cycle test, chemical attack, etc. (cracks having a width on the order of $\mu$m, etc.), micro air bubbles in the adhesive layer (air bubbles having a size on the order of $\mu$m are detected), and the like.

The orientation information is the orientation and density of fibers included in the subject H. The orientation information also includes voids and cracks, for example, "a portion having low orientation and a small fiber amount is a void".

That is, the quality information includes the orientation information.

The input section 24 includes a keyboard having cursor keys, number input keys, and various function keys, and a pointing device such as a mouse. The input section 24 outputs, to the CPU 21, a press signal of a key pressed on the keyboard or an operation signal by the mouse as an input signal. The CPU 21 can execute various kinds of processing based on the operation signals from the input section 24.

The input section 24 functions as an information input receiver for inputting information regarding the selection of the region described above.

The display part 25 includes a monitor such as a cathode ray tube (CRT) or a liquid crystal display (LCD), for example. The display part 25 displays various screens according to instructions of display signals input from the CPU 21. In addition, in a case where a touch screen is adopted as the display part 25, the display 25 also has a function as the input section 24.

The communication section 26 includes a communication interface and communicates with an external device on a network.

The external devices on the network include the controller 19 of the X-ray Talbot imaging device 1, and the controller device 19 and the control device 20 are communicably connected to each other via the communication section 26.

The control device 20 (CPU 21) performs various types of processing, such as association processing, using the various databases described above, and the processing is executed based on a program stored in the storage 23.

[Regarding Association Processing]

The association processing executed in the control device 20 will be described. The association processing is a process of associating the first image (parent image), the evaluation result of the second sample (child sample), the information of the cut-out position of the second sample in the first sample, and the feature amount at the position corresponding to the cut-out position of the first image.

First, the CPU 21 registers the information of the first sample (parent sample) input by the user via the input section 24 in the parent sample information database 23a (Step S1).

Next, the CPU 21 controls the controller device 19, controls the X-ray Talbot imaging device 1, performs Talbot imaging of the first sample, and acquires a Talbot image (first image) of the parent sample (Step S2).

Next, the CPU 21 registers the Talbot image of the parent sample in the parent image database 23b (Step S3). When a Talbot image is registered in the parent image database 23b, the parent sample information database 23a and the parent image database 23b are associated with each other.

Next, the CPU 21 analyzes the Talbot image (Step S4).

Specifically, as shown in a display region D described later, the Talbot image is color-coded in accordance with the magnitude of the signal value of each pixel of the Talbot image. In order to facilitate the determination, all the pixels equal to or less than the threshold value are colored in white.

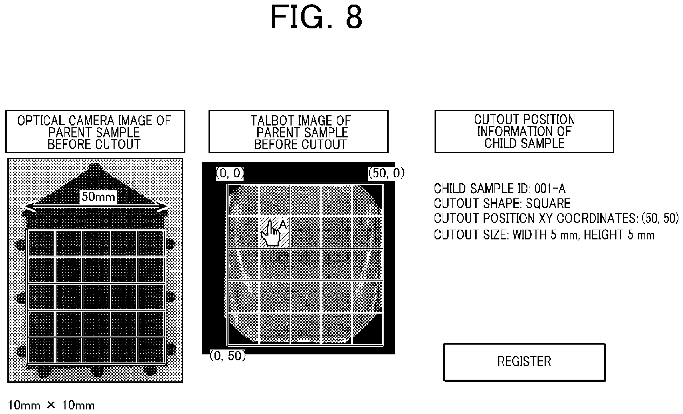

Furthermore, it is preferable that a region to be grouped is set according to a sample shape to be cut out. For example. In a case where the ash content measurement is performed (in a case where a cut-out region registration screen shown in Fig. 8 which will be described later is used), it is preferable that the region is cut out in a 10 mm sized square, and therefore, mosaic processing is performed in which images corresponding to 10 mm sized squares are grouped and a feature amount representing the region is derived. For example, in a case where the Talbot image size is an area of 50 mm $\times$ 50 mm, the image is displayed in areas of 5 $\times$ 5.

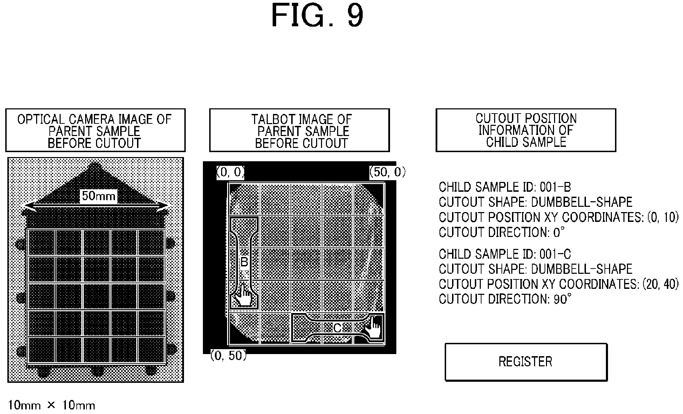

When the sample to be cut out has a dumbbell shape (dumbbell test piece) (when the cut-out region registration screen shown in FIG. 9 described later is used), if the representative width of the dumbbell test piece (for example, the width of the short side) is 8 mm, the regions to be grouped is changed to 8 mm sized squares.

Thus, the user can determine which position in the Talbot image should be focused on, and can explicitly indicate the position to be cut out.

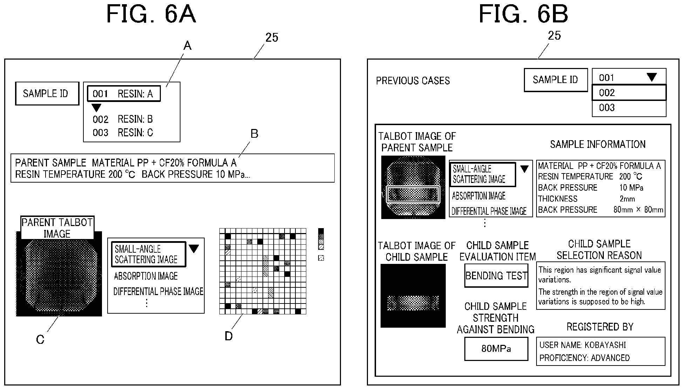

Next, the CPU 21 causes the display part 25 to display the Talbot image and the image analysis result on the image analysis result display screen shown in Fig. 6(a) (Step S5). In other words, the parent sample is evaluated using the Talbot image (first image). Next, the user selects a region, which will be described later, with reference to the image analysis result display screen shown in Fig. 6(a).

Here, the image analysis result display screen illustrated in Fig. 6 (a) will be described.

A display area A is an area for displaying a sample ID to be selected by the user.

A display area B is an area for displaying information of the sample corresponding to the sample ID displayed in the display area A.

A display area C is an area where the Talbot image is displayed.

A display area D is an area for displaying the image analysis result.

Fig. 6(b) is a past evaluation result display screen. The user may refer to the past evaluation result display screen shown in Fig. 6(b) and select a region, which will be described later.

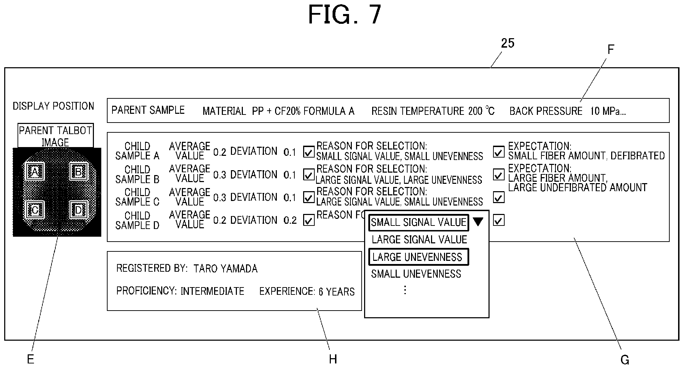

Next, the CPU 21 acquires the cut-out position selection result of the second sample, the selection reason, and the second sample measurement predicted result input by the user via the input section 24 on the region selection screen shown in Fig. 7 (Step S6).

Here, the region selection screen shown in Fig. 7 will be described.

A display area E is an area where the user selects a region (a cut-out region) where a child sample is cut out from a parent sample. Hereinafter, a specific method for registering a cut-out region will be described.

For example, in a case where a parent sample is a 50 mm flat sheet and a child sample of a 10 mm sized square used for ash content measurement is cut out using the cut-out region registration screen shown in Fig. 8, guide lines are displayed at 10 mm intervals on the Talbot image, and cut-out position information can be registered by selecting one of the divided regions and pressing a registration button. In the cut-out region registration screen shown in Fig. 8, the Talbot image may be displayed as it is, or as shown as D in Fig. 6(a), the feature amounts of respective sections according to the size of the sample to be cut out may be displayed distinguishably. Then, the CPU 21 stores the cut-out shape, the upper left XY coordinates of the cut-out position, and the cut-out size as the cut-out position information in the DB (child sample information database 23d) together with the ID of the child sample.

For example, in a case where a parent sample is a flat sheet and a dumbbell-shaped sample is cut out for a tensile test using the cut-out region registration screen shown in Fig. 9 (the short side of the dumbbell test piece is 10 mm), guide lines are displayed at 10 mm intervals on the Talbot image, and the user can specify the cut-out position by moving the cursor over the dumbbell shape to be cut out on the image and pressing the registration button. Then, the CPU 21 stores the dumbbell shape as the cut-out shape, the XY coordinates of the upper left corner of the cut-out position, and the angle information of the cut-out direction in the DB (child sample information database 23d) as the cut-out position information together with the ID of the child sample.

Although a region is cut out here, a region selected without being cut out in Step S7 described later may be further subjected to image processing.

A display area F is an area for displaying information of the parent sample.

A display area G is an area for displaying the feature amount extracted from the image of the cut-out region selected in the display area E, the reason for the selection by the user, and the expected quality. In the example of Fig. 7, the average value and the deviation of the pixels are displayed as the feature amount. The user can also input (or select) know-how such as the reason for selection (signal value, unevenness) and prediction (fiber amount, defibration).

In Fig. 7, information is input via the input section 24 by selection from options prepared in advance. This makes it easier to analyze the correspondence between the options and the proficiency of the know-how inputter described later. For example, an intermediate one tends to select option A, while an advanced one tends to select option B.

A display area H is an area for displaying user information.

When a cut-out region of a child sample is selected in the display area E, the image analysis is performed on the cut-out region by the CPU 21, a feature amount is extracted, and the feature amount is displayed in the display area G.

In addition, when the selection of the cut-out region and the like is completed, the CPU 21 registers information such as the cut-out position information, the feature amount, the selection know-how, and the know-how inputter in the child sample information database 23d. The child sample information database 23d is then associated with the parent sample information database 23c via the parent sample-child sample intermediate table 23a. Furthermore, a user information database 23g is associated as the information of the know-how inputter.

Further, when associating the child sample information database 23d with the parent sample information database 23a, the CPU 21 may control whether or not to associate information on the region selection (selection know-how; child sample selection reason, predicted evaluation result, know-how inputter, and the like) with the parent sample information database 23g based on proficiency information included in the user information database 23a. For example, as shown in Fig. 4, when the proficiency is equal to or higher than intermediate, the information regarding the selection of the region is associated with the parent sample information database 23a, but when the proficiency is that of a beginner, they are not associated. Further, it is also possible to perform control for weighting the associated information in accordance with the proficiency. This processing will be described later as information association processing regarding selection of a region.

Next, using a child sample cut-out device, a cut-out region selected by the user is cut out from the parent sample as a child sample. The CPU 21 controls the controller device 19, controls the X-ray Talbot imaging device 1, and performs imaging or the like of the child sample (Step S7). In the present embodiment, the position B is cut out, Talbot imaging, imaging using an optical microscope, and ash content measurement are performed, and evaluation of the child sample, such as evaluation of the fiber content from the weight change before and after the resin is evaporated or dissolved, and evaluation of the fiber length distribution of the remaining fibers or fillers, is performed. Furthermore, the method of evaluating the child samples is not limited thereto.

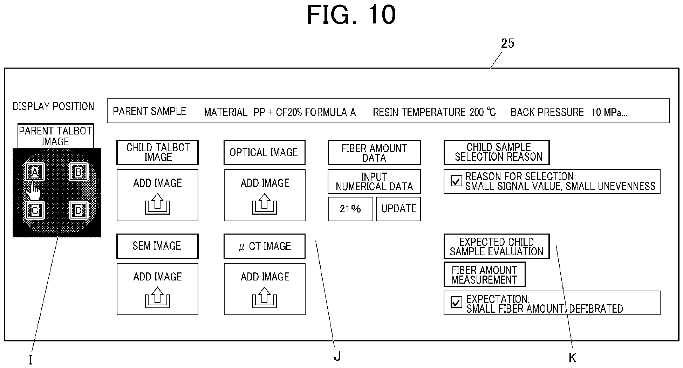

Next, the CPU 21 acquires the image data and the fiber amount data input by the user via the input section 24 on the evaluation result registration screen shown in Fig. 10 (Step S8).

A display area I is a selection area where the user selects a region in which a child sample is cut out from a parent sample.

A display area J is a data (image data and fiber amount data) registration area. In the present embodiment, the parent image is a Talbot image, but the child image to be registered is not limited to a Talbot image, and may be an optical image, a scanning electron microscope (SEM) image, a μCT image, or the like.

A display area K is an area in which the selection reason and the prediction input on the region selection screen are displayed.

When the input is completed, the child sample evaluation result database 23f is registered. Then, the child sample evaluation result database 23f is associated with the child sample information database 23e via the child image-child sample intermediate table 23d.

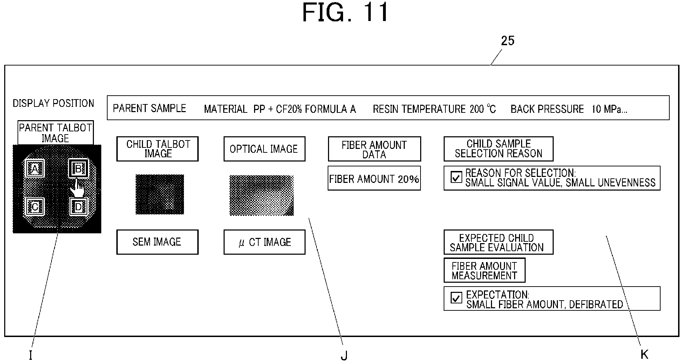

Next, the CPU 21 causes the display part 25 to display an evaluation result display screen shown in Fig. 11 (Step S9). In the present embodiment, since the position B is cut out and Talbot imaging, imaging using an optical microscope, and ash content measurement are performed thereon, the position B is selected, and a Talbot image and an optical image, fiber amount data, and the reason for selection and prediction input on the region selection screen of the child sample are displayed.

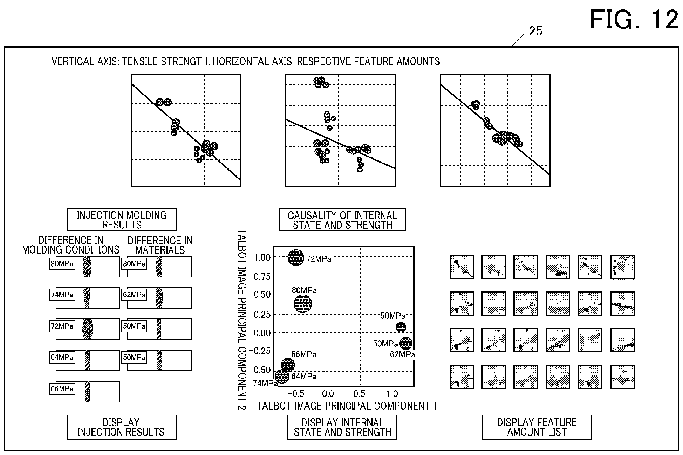

Next, the CPU 21 causes the display part 25 to display an analysis-result display screen shown in Fig. 12 (Step S10). For example, a graph in which the horizontal axis represents the feature amount (statistical amount) extracted from the Talbot image and the vertical axis represents the evaluation result of the child sample can be displayed.

This allows the feature amount and the evaluation result to be compared, making it easier to understand the meaning of the evaluation result. For example, the pixel values of the parent image (Talbot image) and the corresponding evaluation results of tensile strength can be confirmed. In addition, it is possible to visually determine which feature amount is likely to be correlated with the tensile strength.

In addition, as shown in the lower middle diagram of Fig. 12, the first component and the second component of the principal component analysis can be selected and displayed as the feature amount of the Talbot image. This is an example in which the first principal component and the second principal component are set as the vertical axis and the horizontal axis, and the result of the tensile strength associated with each sample is expressed as a bubble chart. This makes it possible to visually grasp, in addition to the simple feature amounts such as the average value and the deviation, the presence or absence of the correlation by the feature amounts extracted by the inductive method (the principal component analysis), and making it easier to understand the meaning of the evaluation result.

Furthermore, as shown in the lower left diagram of Fig. 12, regarding dumbbell pieces in which a weld is formed, nine samples under different molding conditions and material conditions are created and the results of tensile strength tests are shown. A Talbot image (an enlarged image of a weld portion) of the parent sample of each sample is drawn, and the result of the tensile strength test is associated with each sample. Accordingly, it is possible to visually grasp the relationship between the tensile strength and the state of the weld portion, and it is easy to determine what feature amount should be introduced.

[Information Association Processing Related to Region Selection]

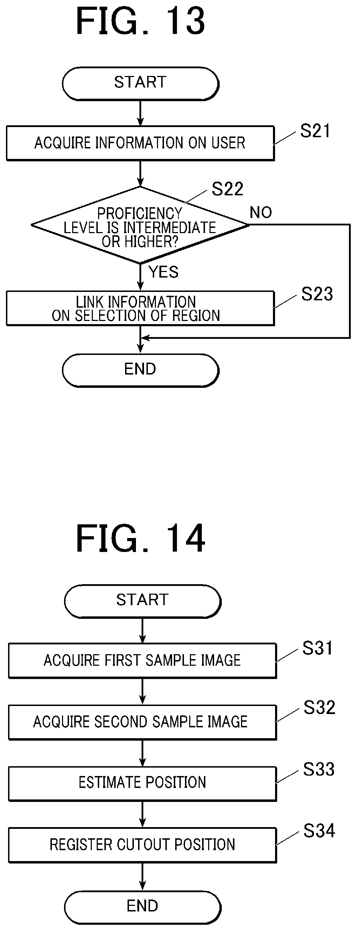

As described above, when the input of the region selection screen shown in Fig. 7 is completed, the child sample information database 23d is associated with the parent sample information database 23c via the parent sample-child sample intermediate table 23a, but it is possible to control whether or not to associate the information on the region selection with the parent sample information database 23a (information association processing on the region selection) by the information on the proficiency (proficiency information) as shown in Fig. 4. The information association processing related to selection of a region will be described with reference to Fig. 13.

First, the CPU 21 acquires, from the user information database 23g, information on a person (user) who enters data in the region selection screen shown in Fig. 7 (Step S21).

Next, the CPU 21 determines whether or not the proficiency of the inputter is, for example, intermediate or higher (Step S22). Here, whether or not the user is of an intermediate or higher level is set as a determination criterion, but the determination criterion is not limited thereto, and whether or not the user is of an advanced level or the like may be set as a determination criterion. In Step S22, if the user is of an intermediate or higher level (Step S22; YES), the processing proceeds to Step S23. In addition, in Step S22, in a case where the user is of a level lower than intermediate (Step S22; NO), the information relating to the selection of the region is not associated with the parent sample information database 23a.

Next, the CPU 21 associates information about the selection of the region with the parent sample information database 23a (Step S23). Then, the information association processing related to the selection of the region ends.

This makes it possible to confirm the selection know-how of a person having a high proficiency. Specifically, when another user opens the evaluation result display screen shown in Fig. 6 (b) or Fig. 11 to check the past test result, the child sample selection reason and the predicted child sample evaluation of the inputter with high proficiency are displayed, so that even a beginner can cut out an accurate sample by checking the know-how of the inputter with high proficiency.

(Second Embodiment)

Although the second sample is cut out in Step S7 in the first embodiment, the input of the cut-out position is manually performed by the user. This may lead to a deviation of an input position, an input error, and a burden of input.

Therefore, automatic detection of the cut-out position is performed in the second embodiment. The cut-out position automatic detection processing will be described with reference to Fig. 14.

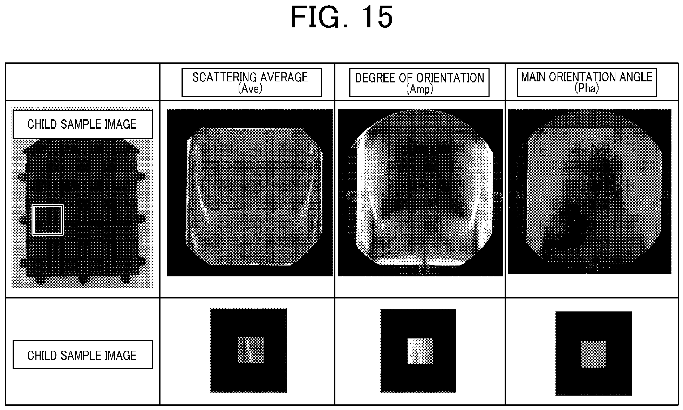

First, a parent sample (first sample) is captured by Talbot imaging using the X-ray Talbot imaging device 1. The CPU 21 of the control device 20 acquires a parent sample image as shown in the upper part of Fig. 15 (Step S21).

Next, a child sample (second sample) is physically cut out from the parent sample.

Next, the child sample is captured using the X-ray Talbot imaging device 1. The CPU 21 of the control device 20 acquires a child sample image as shown in the lower part of Fig. 15 (Step S22).

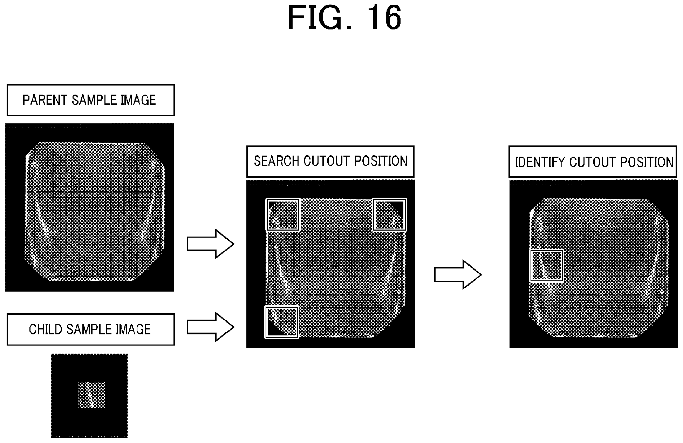

Next, as shown in Fig. 16, the CPU 21 performs pattern matching between the image of the parent sample and the image of the child sample, and estimates the position of the child sample in the parent sample (Step S23). For example, a general-purpose position search method such as OpenCV is used.

Next, the CPU 21 registers the estimated position information as a cut-out position in the child sample information database 23d (Step S24).

Thus, instead of inputting the cut-out position, the cut-out position is estimated and registered in the database after the cutting out so that it is possible to prevent the occurrence of a deviation of the input position, an input error, and a burden of input.

(Third Embodiment)

In the first embodiment and the second embodiment, the child sample is physically cut out, but the damage caused by cutting out (processing the sample) cannot be known.

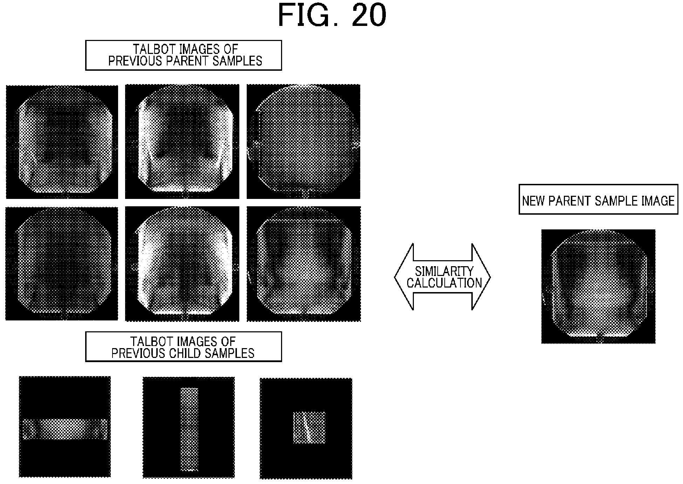

Therefore, in the third embodiment, the parent image before the child sample is cut out and the child image captured after the child sample is physically cut out are compared with each other so that the influence of the cutting out is grasped. The cutting out influence identification processing will be described with reference to Fig. 20.

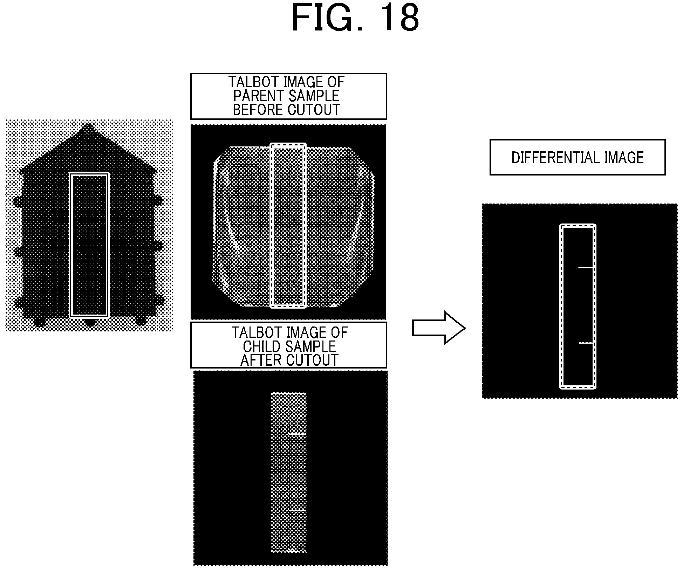

First, a parent sample (first sample) is captured by Talbot imaging using the X-ray Talbot imaging device 1. The CPU 21 of the control device 20 acquires a parent sample image as shown in the upper part of Fig. 18 (Step S31).

Next, a child sample (second sample) is physically cut out from the parent sample.

Next, the child sample is captured using the X-ray Talbot imaging device 1. The CPU 21 of the control device 20 acquires a child sample image as shown in the lower part of Fig. 18 (Step S32).

Next, the CPU 21 of the control device 20 extracts the image at the cut-out position of the image of the parent sample (in the upper frame of Fig. 18), and performs the differential processing of the image of the child sample. The CPU 21 of the control device 20 generates a differential image as shown on the right side of Fig. 18 (Step S33).

Next, the CPU 21 specifies an influenced part by the cutting out from the differential image (Step S34). To be specific, in the example of the differential image on the right side of Fig. 18, the CPU 21 specifies that there are two cracks on the right side of the child sample.

The signal values of the differential image may be subjected to arithmetic processing (such as addition as an absolute value) to obtain a quantitative change amount, which may be used as an index of damage due to processing.

(Fourth Embodiment)

In the determination of the cut-out position, a person who has sufficient experience in cutting out rarely hesitates in the determination of the cut-out position, but a person who has little experience may hesitate in the determination of the cut-out position.

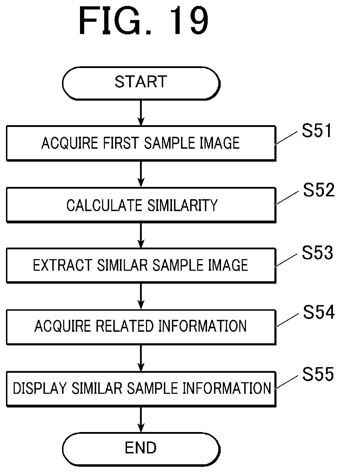

Therefore, in the fourth embodiment, when the cut-out position of the sample is determined, the past knowledge is made use of. That is, cases similar to the parent image of the target sample is searched for from the images of the parent samples captured in the past and the child images cut out from the parent images, and information such as the information of the cut-out position, the cutout reason, and the evaluation result of the child sample is presented. The similar sample information display processing will be described with reference to Fig. 19.

First, a parent sample (first sample) is captured by Talbot imaging using the X-ray Talbot imaging device 1. The CPU 21 of the control device 20 acquires a new parent sample image as shown on the right side of Fig. 20 (Step S41).

Next, the CPU 21 calculates the similarity between the new parent sample image and the previously captured parent sample image or child sample image (the image of the second sample) (Step S42).

Next, based on the calculated similarities, the CPU 21 extracts a parent sample image and a child sample image having high similarities (Step S43).

To be specific, as the CPU 21, only the one having the highest similarity may be extracted, or a plurality of (e.g., three) ones may be extracted in descending order of similarity.

Next, the CPU 21 acquires information associated with the extracted parent sample image and child sample image from the storage 23 (Step S44).

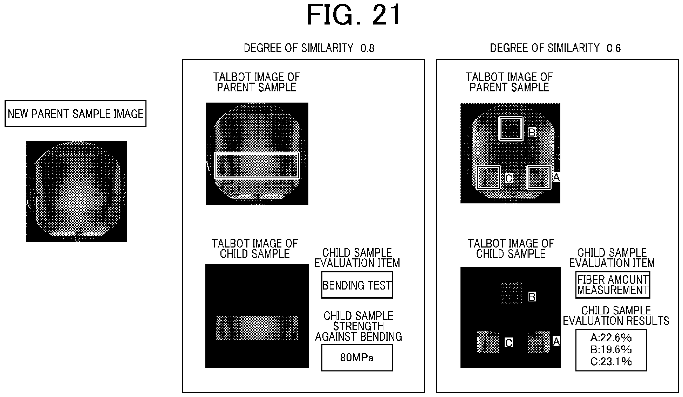

Next, as shown in Fig. 21, the CPU 21 causes the display part 25 to display information on the cut-out position regarding the parent sample having a high degree of similarity or the parent sample of the child sample having a high degree of similarity, the reason why it is cut out, the result of evaluation performed on the child sample, and the like (Step S45).

Specific examples of the method of calculating the similarity include a method of using a histogram (using the histogram similarity function of OpenCv), a method of using template matching, and a method of combining the AKAZE feature amount and the k-nearest neighbor algorithm (kNN).

In addition, as image processing before the calculation of the degree of similarity, it is desirable to perform zero filling processing on the background. Specifically, contour extraction is performed, and the signal outside the contour of the sample is filled with 0.

In addition, since the small-angle scattering image and the orientation image have signal value dependency due to the thickness, when subjects having different thicknesses are compared, the levels of the absolute values do not match, and the degree of similarity decreases. When it is desired to reduce the influence of the difference in the thickness of the subjects for comparison, it is desirable to use (a) an image obtained by dividing a small-angle scattering image by an absorption image, (b) an eccentricity Ecc image, and (c) an image obtained by dividing an Amp image by an Ave image.

Note that the Amp image refers to an image indicating an amplification value (signal value amp) for each pixel, and the Ave image refers to an image indicating an average value (signal value ave) for each pixel (Japanese Unexamined Patent Publication No. 2021-089195). The eccentricity Ecc image refers to an image indicating the eccentricity ecc for each pixel. When $\sigma1 = ave + amp$ (corresponding to the maximum value of the small-angle signal value) and $\sigma2 = ave - amp$ (corresponding to the minimum value of the small-angle signal value) are calculated using the signal values amp and ave obtained from the orientation image, the eccentricity ecc is calculated using the following expression.

[Expression 1]

$$ecc = \sqrt{\frac{\sigma_1^2 - \sigma_2^2}{\sigma_1^2}}$$

(Effect)

As described hereinbefore, the image management system (the X-ray Talbot imaging device 1 and the control device 20) includes the controller (CPU 21) that stores the information related to the selection of the region in the storage section (the storage 23) in association with the first image based on the proficiency information of the user when the user selects the region from the first image of the first sample. Thus, when a region is selected from the parent sample and its quality is evaluated, the reason and intensions of selection of the region can be accumulated as know-how.

Since the first image is a Talbot image, it is possible to acquire information such as unevenness, defects, and voids of the fibers, and it is possible to determine anisotropy of orientation, which is the quality of the cut-out sample, and the presence or absence of voids from the image.

In addition, the controller (CPU 21) stores the position information of the region in the first sample, the information related to the selection of the region, and the first image in the storage section (storage 23) in association with each other. Thus, when a region is selected from the parent sample and the quality evaluation is performed, the reason or intention of the region selection can be accumulated as know-how.

Furthermore, the image management system includes: the information input receiver (the input section 24) through which information on selection of a region is input; and the acquirer (the CPU 21) that acquires proficiency information of a user who has input the information on the selection of the region, and when the proficiency information acquired by the acquirer satisfies a predetermined criterion, the controller (the CPU 21) stores the information on selection of the region in the storage section in association with the first image. Thus, the know-how of the user with high proficiency can be accumulated.

The information input receiver makes it easier for the user to select the region as information related to the selection of the region is input by selection from options prepared in advance. And it is easier to analyze the correspondence between the options and the proficiency of the know-how inputter.

Furthermore, the controller (CPU 21) can accurately grasp the cut-out position of the child sample by specifying the position information of the region in the first sample based on the second image obtained by imaging the region.

The same imaging method as that used for the first image second image is used for the second image obtained by imaging the second sample cut out from the first sample, and the controller (CPU 21) compares the image at the position selected from the first image with the second image to specify a change before and after cutting out the second sample. Therefore, it is possible to check damage caused by processing the sample.

In addition, since the controller (CPU 21) acquires the image similar to the first sample and the information associated with the acquired image from the storage section (storage 23) and displays the acquired information on the display, it is possible to utilize the past knowledge when determining the cut-out position of the sample.

Furthermore, the sample selection method includes: storing, in a storage section, information on selection of a region from the first image information of the first sample in which predetermined quality information is recognizable in association with the first image information on the basis of proficiency information of a user when the user selects the region (Steps S6 and S23); and cutting out a second sample from the selected region (Step S7) or performing image analysis on the selected region (Step S6). Therefore, when a region is selected from the parent sample and the quality evaluation is performed, the reason or intention of the region selection can be accumulated as know-how.

Furthermore, since the image management device (the X-ray Talbot imaging device 1 and the control device 20) includes the controller (CPU 21) that stores, in the storage section (the storage 23), information on selection of the first region in association with the first image information on the basis of the user's proficiency information, when the first region is selected from the first image information in the first sample, the reason and intention of region selection can be accumulated as know-how when a region is selected from the parent sample and the quality evaluation is performed.

Since the controller (CPU 21) acquires the image similar to the first sample from the storage section and causes the display part (display part 25) to display the information related to the selection of the region associated with the acquired image, it is possible to confirm the reason or intention of the region selection as know-how when a region is selected from the parent sample and the quality evaluation is performed.

Furthermore, the image display device (the X-ray Talbot imaging device 1 and the control device 20) includes the controller (CPU 21) that stores, in the storage section (the storage 23), information on selection of a region in association with the first image information based on the user's proficiency information, when the region is selected from the first image information. The controller acquires an image similar to the first sample from the storage section and displays, in the display part (the display part 25), the information on selection of the region associated with the acquired image. Therefore, when a region is selected from the parent sample and quality evaluation is performed, the reason or intention of region selection can be checked as know-how.

The program causes the computer of the image management device (the X-ray Talbot imaging device 1 and the control device 20) to function as the controller (CPU 21) that stores, in the storage section (the storage 23), information on selection of the region in association with the first image information on the basis of the user's proficiency information when the region is selected from the first image information in the first sample, so that the reason or intention of region selection can be accumulated as knowhow when a region is selected from the parent sample and quality evaluation is performed.

Although the embodiments of the present invention have been described above, the above-described present embodiments are preferred examples according to the present invention and do not limit the present invention.

For example, the first to fourth embodiments may be combined as appropriate.

Furthermore, although the first image is a Talbot image in the above description, it is not limited thereto. For example, an image captured using an optical microscope may be used, or an inspection device capable of visually displaying a crack or the like may be used.

The position (coordinates) of the cut-out region may be based on a certain point of the first sample or a certain point of the second sample.

Furthermore, in the fourth embodiment, as shown in Fig. 19, the CPU 21 causes the display part 25 to display information on the cut-out position and the cut-out reason for a parent sample having a high degree of similarity or a parent sample of a child sample having a high degree of similarity, a result of evaluation performed on the child sample, and the like, and the user cuts out the child sample on the basis of the information, but the cut-out position may be automatically set in the cutout device without causing the display part 25 to display the information.

Although a hard disk, a semiconductor nonvolatile memory, or the like is used in the above description as a computer-readable medium storing the program according to the present invention, the present invention is not limited to this example. Other applicable computer-readable media include portable recording media such as CD-ROM.

In addition, the detailed configuration and the detailed operation of each device can be appropriately changed without departing from the spirit and scope of the present invention.

Reference Signs List

1 X-RAY TALBOT IMAGING DEVICE
11 X-RAY GENERATOR
19 CONTROLLER DEVICE

2 IMAGE PROCESSING DEVICE
20 CONTROL DEVICE
21 CPU (CONTROLLER)
22 RAM
23 STORAGE
23A PARENT SAMPLE INFORMATION DATABASE
23B PARENT IMAGE DATABASE
23C PARENT SAMPLE - CHILD SAMPLE INTERMEDIATE TABLE
23D CHILD SAMPLE INFORMATION DATABASE
23E CHILD IMAGE - CHILD SAMPLE INTERMEDIATE TABLE
23F CHILD SAMPLE EVALUATION RESULT DATABASE
23G USER INFORMATION DATABASE
24 INPUT SECTION (INFORMATION INPUT RECEIVER)
25 DISPLAY PART
26 COMMUNICATION SECTION
H SUBJECT (INSPECTION TARGET)

**Claims**

1. An image management system comprising:
   a controller that causes a storage section to store information regarding selection of a region when a user selects the region from a first image of a first sample from which predetermined quality information can be recognized, based on proficiency information of the user in association with the first image.

2. The image management system according to claim 1,
   wherein the quality information includes fiber orientation information.

3. The image management system according to claim 1,
   wherein the first image is a Talbot image.

4. The image management system according to claim 1,
   wherein the controller causes the storage section to store position information of the region in the first sample, information on the selection of the region, and the first image in association with each other.

5. The image management system according to claim 1, further comprising:

   an information input receiver through which information on the selection of the region is input; and
   an acquirer that acquires proficiency information of a user who has input the information on the selection of the region,
   wherein when the proficiency information acquired by the acquirer satisfies a predetermined criterion, the controller causes the storage section to store the information related to the selection of the region in association with the first image.

6. The image management system according to claim 5,
   wherein the information related to the selection of the region is input by selection from options prepared in advance through the information input receiver.

7. The image management system according to claim 1,
   wherein the controller specifies the position information of the region in the first sample based on a second image obtained by imaging the region.

8. The image management system according to claim 1,

   wherein a second image is obtained by imaging a second sample cut out from the first sample using a same imaging method as used to obtain the first image,
   wherein the controller compares an image at a position selected from the first image with the second image to identify a change before and after cutting out the second sample.

9. The image management system according to claim 1,
   wherein the controller acquires an image similar to the first sample and information associated with the acquired image from the storage section, and causes a display part to display the acquired information.

10. A sample selection method comprising:

    a step of storing information regarding selection of a region when a user selects the region from a first image of a first sample from which predetermined quality information can be recognized, based on proficiency information of the user in association with the first image; and
    a step of cutting out a second sample from the selected region or performing image analysis of the selected region.

11. The sample selection method according to claim 10,
    wherein the first image information relates to fiber orientation information.

12. An image management device comprising:
    a controller that causes a storage section to store information regarding selection of a region when a user selects the region from a first image of a first sample from which predetermined quality information can be recognized, based on proficiency information of the user in association with the first image.

13. The image management device according to claim 12,
wherein the controller acquires an image similar to the first sample from the storage section and causes a display part to display information related to the selection of the region in association with the acquired image.

14. The image management apparatus according to claim 12,
wherein the first image information relates to fiber orientation information.

15. An image display device comprising:

a controller that causes a storage section to store information regarding selection of a region when a user selects the region from a first image of a first sample from which predetermined quality information can be recognized, based on proficiency information of the user in association with the first image,
wherein the controller acquires an image similar to the first sample from the storage section and causes a display part to display information related to the selection of the region in association with the acquired image.

16. The image display device according to claim 15,
wherein the first image information relates to fiber orientation information.

17. A program causing a computer of an image management device to function as:
a controller that causes a storage section to store information regarding selection of a region when a user selects the region from a first image of a first sample from which predetermined quality information can be recognized, based on proficiency information of the user in association with the first image.

# FIG. 1

# FIG. 2

FIG. 3

23

**PARENT SAMPLE INFORMATION** 23a
SAMPLE ID
MATERIAL
MOLDING CONDITIONS
MOLD

**TALBOT PARENT IMAGE** 23b

**PARENT SAMPLES – CHILD SAMPLES INTERMEDIATE TABLE** 23c

**CHILD SAMPLE INFORMATION**
SAMPLE ID

CUTOUT POSITION INFORMATION

FEATURE AMOUNT OF SELECTION POSITION

SELECTION KNOW-HOW
CHILD SAMPLE SELECTION REASON
EXPECTED EVALUATION RESULT

KNOW-HOW INPUTTER

23d

**CHILD IMAGES – CHILD SAMPLES INTERMEDIATE TABLE** 23e

**USER INFORMATION** 23g
USER NAME: MR. A
PROFICIENCY: INTERMEDIATE
YEARS OF EMPLOYMENT: 5

**CHILD SAMPLE EVALUATION RESULTS** 23f

CHILD SAMPLE EVALUATION RESULT A

CHILD SAMPLE EVALUATION RESULT B

CHILD SAMPLE EVALUATION RESULT C

TALBOT CHILD IMAGE

# FIG. 4

| USER NAME | PROFICIENCY | YEARS OF WORK EXPERIENCE | | |
| --- | --- | --- | --- | --- |
| | | MATERIAL | MOLDING | EVALUATION OF PHYSICAL PROPERTIES |
| YAMADA | BEGINNER | 2 | 0 | 0 |
| SUZUKI | INTERMEDIATE | 5 | 0 | 5 |
| SATOH | BEGINNER | 2 | 2 | 1 |
| KOBAYASHI | ADVANCED | 10 | 10 | 10 |

# FIG. 5

START

REGISTER FIRST SAMPLE INFORMATION — S1

PERFORM TALBOT IMAGING OF FIRST SAMPLE — S2

REGISTER TALBOT IMAGE — S3

ANALYZE IMAGE — S4

DISPLAY TALBOT IMAGE AND IMAGE ANALYSIS RESULTS — S5

SELECT CUTOUT POSITION OF SECOND SAMPLE
INPUT SELECTION REASON AND EXPECTED SECOND SAMPLE MEASUREMENT RESULTS — S6

CUTOUT SECOND SAMPLE — S7

INPUT SECOND SAMPLE EVALUATION RESULTS — S8

DISPLAY FIRST AND SECOND SAMPLE EVALUATION RESULTS — S9

DISPLAY LISTS OF STATISTICAL INFORMATION OF FIRST SAMPLE
IMAGES AND EVALUATION RESULTS OF THE SECOND SAMPLES — S10

END

# FIG. 6A

| SAMPLE ID | 001   RESIN: A |
| | ▼ |
| | 002   RESIN: B |
| | 003   RESIN: C |

PARENT SAMPLE  MATERIAL PP + CF20% FORMULA A
RESIN TEMPERATURE 200 ℃  BACK PRESSURE 10 MPa...

PARENT TALBOT IMAGE

SMALL-ANGLE SCATTERING IMAGE ▼
ABSORPTION IMAGE
DIFFERENTIAL PHASE IMAGE
⋮

# FIG. 6B

PREVIOUS CASES

| SAMPLE ID | 001   ▼ |
| | 002 |
| | 003 |

TALBOT IMAGE OF PARENT SAMPLE

SMALL-ANGLE SCATTERING IMAGE ▼
ABSORPTION IMAGE
DIFFERENTIAL PHASE IMAGE
⋮

SAMPLE INFORMATION

MATERIAL  PP + CF20% FORMULA A
RESIN TEMPERATURE   200 ℃
BACK PRESSURE       10 MPa
THICKNESS           2mm
BACK PRESSURE       80mm × 80mm

TALBOT IMAGE OF CHILD SAMPLE

CHILD SAMPLE EVALUATION ITEM

BENDING TEST

CHILD SAMPLE STRENGTH AGAINST BENDING

80MPa

CHILD SAMPLE SELECTION REASON

This region has significant signal value variations.
The strength in the region of signal value variations is supposed to be high.

REGISTERED BY

USER NAME: KOBAYASHI
PROFICIENCY: ADVANCED

# FIG. 7

DISPLAY POSITION

PARENT TALBOT IMAGE

| PARENT SAMPLE | MATERIAL PP + CF20% FORMULA A | RESIN TEMPERATURE 200 ℃ | BACK PRESSURE 10 MPa... |

CHILD SAMPLE A    AVERAGE VALUE 0.2 DEVIATION 0.1    ☑ REASON FOR SELECTION: SMALL SIGNAL VALUE, SMALL UNEVENNESS    ☑ EXPECTATION: SMALL FIBER AMOUNT, DEFIBRATED

CHILD SAMPLE B    AVERAGE VALUE 0.3 DEVIATION 0.1    ☑ REASON FOR SELECTION: LARGE SIGNAL VALUE, LARGE UNEVENNESS    ☑ EXPECTATION: LARGE FIBER AMOUNT, LARGE UNDEFIBRATED AMOUNT

CHILD SAMPLE C    AVERAGE VALUE 0.3 DEVIATION 0.1    ☑ REASON FOR SELECTION: LARGE SIGNAL VALUE, SMALL UNEVENNESS    ☑

CHILD SAMPLE D    AVERAGE VALUE 0.2 DEVIATION 0.2    ☑ REASON F[ SMALL SIGNAL VALUE ▼    ☑

LARGE SIGNAL VALUE

LARGE UNEVENNESS

SMALL UNEVENNESS

:

REGISTERED BY: TARO YAMADA

PROFICIENCY: INTERMEDIATE    EXPERIENCE: 6 YEARS

25    F

E    H    G

# FIG. 8

| OPTICAL CAMERA IMAGE OF PARENT SAMPLE BEFORE CUTOUT | TALBOT IMAGE OF PARENT SAMPLE BEFORE CUTOUT | CUTOUT POSITION INFORMATION OF CHILD SAMPLE |

50mm

10mm × 10mm

(0, 0)　　　(50, 0)

A

(0, 50)

CHILD SAMPLE ID: 001-A
CUTOUT SHAPE: SQUARE
CUTOUT POSITION XY COORDINATES: (50, 50)
CUTOUT SIZE: WIDTH 5 mm, HEIGHT 5 mm

REGISTER

# FIG. 9

| OPTICAL CAMERA IMAGE OF PARENT SAMPLE BEFORE CUTOUT | TALBOT IMAGE OF PARENT SAMPLE BEFORE CUTOUT | CUTOUT POSITION INFORMATION OF CHILD SAMPLE |
|---|---|---|

50mm

10mm × 10mm

(0, 0)   (50, 0)

B

C

(0, 50)

CHILD SAMPLE ID: 001-B
CUTOUT SHAPE: DUMBBELL-SHAPE
CUTOUT POSITION XY COORDINATES: (0, 10)
CUTOUT DIRECTION: 0°

CHILD SAMPLE ID: 001-C
CUTOUT SHAPE: DUMBBELL-SHAPE
CUTOUT POSITION XY COORDINATES: (20, 40)
CUTOUT DIRECTION: 90°

REGISTER

# FIG. 10

25

| DISPLAY POSITION | PARENT SAMPLE | MATERIAL PP + CF20% FORMULA A | RESIN TEMPERATURE 200 °C | BACK PRESSURE 10 MPa... |
|---|---|---|---|---|

PARENT TALBOT IMAGE

A B
C D

| CHILD TALBOT IMAGE | OPTICAL IMAGE | FIBER AMOUNT DATA | CHILD SAMPLE SELECTION REASON |
|---|---|---|---|
| ADD IMAGE | ADD IMAGE | INPUT NUMERICAL DATA | ☑ REASON FOR SELECTION: SMALL SIGNAL VALUE, SMALL UNEVENNESS |
| | | 21%  UPDATE | |

| SEM IMAGE | μ CT IMAGE | | EXPECTED CHILD SAMPLE EVALUATION |
|---|---|---|---|
| ADD IMAGE | ADD IMAGE | | FIBER AMOUNT MEASUREMENT |
| | | | ☑ EXPECTATION: SMALL FIBER AMOUNT, DEFIBRATED |

I                                              J                              K

# FIG. 11

25

| DISPLAY POSITION | PARENT SAMPLE  MATERIAL  PP + CF20% FORMULA A    RESIN TEMPERATURE 200 °C    BACK PRESSURE  10 MPa... |

PARENT TALBOT IMAGE

A  B
C  D

CHILD TALBOT IMAGE

OPTICAL IMAGE

FIBER AMOUNT DATA

FIBER AMOUNT 20%

CHILD SAMPLE SELECTION REASON

☑ REASON FOR SELECTION:
SMALL SIGNAL VALUE, SMALL UNEVENNESS

SEM IMAGE

μ CT IMAGE

EXPECTED CHILD SAMPLE EVALUATION

FIBER AMOUNT MEASUREMENT

☑ EXPECTATION:
SMALL FIBER AMOUNT, DEFIBRATED

I                                                                J                                                          K

FIG. 12

25

VERTICAL AXIS: TENSILE STRENGTH, HORIZONTAL AXIS: RESPECTIVE FEATURE AMOUNTS

INJECTION MOLDING RESULTS

DIFFERENCE IN MOLDING CONDITIONS    DIFFERENCE IN MATERIALS

80MPa    80MPa

74MPa    62MPa

72MPa    50MPa

64MPa    50MPa

66MPa

DISPLAY INJECTION RESULTS

CAUSALITY OF INTERNAL STATE AND STRENGTH

TALBOT IMAGE PRINCIPAL COMPONENT 2

1.00    72MPa
0.75
0.50    80MPa
0.25
0.00    50MPa
-0.25    50MPa    62MPa
-0.50    66MPa
         64MPa
74MPa

-0.5    0.0    0.5    1.0

TALBOT IMAGE PRINCIPAL COMPONENT 1

DISPLAY INTERNAL STATE AND STRENGTH

DISPLAY FEATURE AMOUNT LIST

# FIG. 13

START

ACQUIRE INFORMATION ON USER —— S21

S22

PROFICIENCY
LEVEL IS INTERMEDIATE
OR HIGHER?

NO

YES

LINK INFORMATION
ON SELECTION OF REGION —— S23

END

# FIG. 14

START

ACQUIRE FIRST SAMPLE IMAGE —— S31

ACQUIRE SECOND SAMPLE IMAGE —— S32

ESTIMATE POSITION —— S33

REGISTER CUTOUT POSITION —— S34

END

# FIG. 15

| | SCATTERING AVERAGE (Ave) | DEGREE OF ORIENTATION (Amp) | MAIN ORIENTATION ANGLE (Pha) |
|---|---|---|---|
| CHILD SAMPLE IMAGE | | | |
| CHILD SAMPLE IMAGE | | | |

# FIG. 16

PARENT SAMPLE IMAGE

CHILD SAMPLE IMAGE

SEARCH CUTOUT POSITION

IDENTIFY CUTOUT POSITION

# FIG. 17

```
                    ┌─────────────┐
                    │    START    │
                    └──────┬──────┘
                           │
                           ▼
          ┌──────────────────────────────────┐
          │   ACQUIRE FIRST SAMPLE IMAGE      │──── S41
          └───────────────┬──────────────────┘
                          │
                          ▼
          ┌──────────────────────────────────┐
          │  ACQUIRE SECOND SAMPLE IMAGE      │──── S42
          └───────────────┬──────────────────┘
                          │
                          ▼
          ┌──────────────────────────────────┐
          │   GENERATE DIFFERENTIAL IMAGE     │──── S43
          └───────────────┬──────────────────┘
                          │
                          ▼
          ┌──────────────────────────────────┐
          │      IDENTIFY AFFECTED PART       │──── S44
          └───────────────┬──────────────────┘
                          │
                          ▼
                  ┌─────────────┐
                  │     END     │
                  └─────────────┘
```

# FIG. 18

TALBOT IMAGE OF
PARENT SAMPLE
BEFORE CUTOUT

TALBOT IMAGE OF
CHILD SAMPLE
AFTER CUTOUT

DIFFERENTIAL IMAGE

# FIG. 19

START

ACQUIRE FIRST SAMPLE IMAGE — S51

CALCULATE SIMILARITY — S52

EXTRACT SIMILAR SAMPLE IMAGE — S53

ACQUIRE RELATED INFORMATION — S54

DISPLAY SIMILAR SAMPLE INFORMATION — S55

END

# FIG. 20

TALBOT IMAGES OF
PREVIOUS PARENT SAMPLES

NEW PARENT SAMPLE IMAGE

SIMILARITY
CALCULATION

TALBOT IMAGES OF
PREVIOUS CHILD SAMPLES

# FIG. 21

DEGREE OF SIMILARITY  0.8

DEGREE OF SIMILARITY  0.6

NEW PARENT SAMPLE IMAGE

TALBOT IMAGE OF
PARENT SAMPLE

TALBOT IMAGE OF
CHILD SAMPLE

CHILD SAMPLE
EVALUATION ITEM

BENDING TEST

CHILD SAMPLE
STRENGTH
AGAINST BENDING

80MPa

TALBOT IMAGE OF
PARENT SAMPLE

TALBOT IMAGE OF
CHILD SAMPLE

CHILD SAMPLE
EVALUATION ITEM

FIBER AMOUNT
MEASUREMENT

CHILD SAMPLE
EVALUATION RESULTS

A:22.6%
B:19.6%
C:23.1%

## INTERNATIONAL SEARCH REPORT

| International application No. |
| --- |
| **PCT/JP2023/027237** |

| A. | CLASSIFICATION OF SUBJECT MATTER |
| --- | --- |

*G01N 23/041*(2018.01)i; *G01N 23/04*(2018.01)i
FI:   G01N23/041; G01N23/04 340

According to International Patent Classification (IPC) or to both national classification and IPC

| B. | FIELDS SEARCHED |
| --- | --- |

Minimum documentation searched (classification system followed by classification symbols)

G01N21/84-G01N21/958; G01N23/00-G01N23/2276; G01N29/00-G01N29/52

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-52102 A (KONICA MINOLTA INC) 04 April 2022 (2022-04-04) | 1-17 |
| A | JP 2018-159691 A (MITSUBISHI CHEM CORP) 11 October 2018 (2018-10-11) | 1-17 |
| A | JP 2014-192743 A (OLYMPUS CORP) 06 October 2014 (2014-10-06) | 1-17 |
| A | JP 2021-120639 A (HITACHI LTD) 19 August 2021 (2021-08-19) | 1-17 |
| A | US 4158766 A (SAAB-SCANIA AKTIEBOLAG) 19 June 1979 (1979-06-19) | 1-17 |
| P, A | JP 2023-88704 A (KONICA MINOLTA INC) 27 June 2023 (2023-06-27) | 1-17 |

☐ Further documents are listed in the continuation of Box C.  ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 August 2023** | **05 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/027237**

| Patent document cited in search report | | | Publication date (day/month/year) | Patent family member(s) | | | Publication date (day/month/year) |
|---|---|---|---|---|---|---|---|
| JP | 2022-52102 | A | 04 April 2022 | US | 2022/0091049 | A1 | |
| | | | | EP | 3974807 | A1 | |
| JP | 2018-159691 | A | 11 October 2018 | (Family: none) | | | |
| JP | 2014-192743 | A | 06 October 2014 | US | 2016/0006945 | A1 | |
| | | | | WO | 2014/155789 | A1 | |
| | | | | CN | 105052123 | A | |
| JP | 2021-120639 | A | 19 August 2021 | US | 2021/0239875 | A1 | |
| | | | | EP | 3859601 | A1 | |
| | | | | CN | 113267516 | A | |
| US | 4158766 | A | 19 June 1979 | DE | 2807670 | A1 | |
| | | | | FR | 2384597 | A1 | |
| JP | 2023-88704 | A | 27 June 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3366352 B

- JP 2021089195 A